# FASCICULE DE BREVET EUROPEEN

(11) **EP 2 882 948 B1**
(45) Date de publication et mention de la délivrance du brevet: **07.09.2016**
(21) Numéro de dépôt: 13756650.1
(22) Date de dépôt: 01.08.2013
(51) Int. Cl.: F02B 39/04, F02B 37/12

(54) **SYSTÈME D'ENTRAÎNEMENT D'AU MOINS UN COMPRESSEUR, NOTAMMENT D'UN COMPRESSEUR DE SURALIMENTATION D'UN MOTEUR THERMIQUE**
SYSTEM ZUR ANSTEUERUNG MINDESTENS EINES VERDICHTERS, INSBESONDERE EINES AUFLADERVERDICHTERS EINES VERBRENNUNGSMOTORS
SYSTEM FOR DRIVING AT LEAST ONE COMPRESSOR, NOTABLY A COMBUSTION ENGINE SUPERCHARGER COMPRESSOR

(30) Priorité: 13.08.2012 FR 1257788
(43) Date de publication de la demande: 17.06.2015
(73) Titulaire: Valeo Systèmes de Contrôle Moteur, 95800 Cergy (FR)
(72) Inventeur: ALFANO, Damien, 78630 Orgeval (FR); LAGRE, Jean-Louis, F-95000 Cergy (FR)
(74) Mandataire: Garcia, Christine
(86) Numéro de dépôt international: PCT/FR2013/051866
(87) Numéro de publication internationale: WO 2014/027156

(56) Documents cités:
- WO-A1-2008/024895
- WO-A1-2008/135722
- WO-A2-2009/014488
- DE-A1-102004 018 420

## Description

La présente invention concerne un système d'entraînement d'un compresseur. Le compresseur est notamment, mais non exclusivement, un compresseur de suralimentation d'un moteur thermique.

Dans le cas où la consigne de couple du moteur varie brutalement et où la suralimentation du moteur visant à l'aider à suivre la consigne de couple est uniquement obtenue grâce à un turbocompresseur, le temps de réponse de ce dernier, encore appelé « turbolag », pose problème.

Pour remédier à ce problème, différentes solutions sont connues, par exemple l'utilisation de plusieurs turbocompresseurs sélectivement actifs, l'utilisation d'un compresseur électrique ou encore l'utilisation d'un compresseur mécanique centrifuge.

Aucune de ces solutions n'est réellement satisfaisante en termes de coût, d'encombrement induit, d'efficacité et d'étendue de la plage d'utilisation.

On connaît par ailleurs des demandes WO 2009/014488 et WO 2008/135722 des systèmes d'entraînement de compresseur de turbocompresseur comprenant un train épicycloïdal. Dans aucun de ces systèmes, le planétaire extérieur du train ne forme un volant d'inertie.

Il existe un besoin pour disposer d'un système d'entraînement d'un compresseur qui permette à ce dernier de suivre rapidement une variation de consigne de couple, notamment pour répondre de façon satisfaisante au problème de temps de réponse du turbocompresseur, tout en étant relativement peu coûteux, efficace, peu encombrant et utilisable sur une plage étendue de vitesse de la machine tournante.

L'invention a pour but de répondre à ce besoin et elle y parvient, selon l'un de ses aspects, à l'aide d'un système d'entraînement d'au moins un compresseur, comprenant :
- une entrée apte à être reliée à une courroie solidaire d'une machine tournante,
- une sortie apte à être reliée au compresseur,
- un train épicycloïdal dont le planétaire extérieur forme un volant d'inertie, et dont le planétaire intérieur est notamment relié à la sortie du système, et
- un dispositif permettant de modifier la configuration du train épicycloïdal de manière à ce que dernier prenne sélectivement au moins les configurations suivantes :
   - (i) une configuration dans laquelle le train épicycloïdal est accouplé à l'entrée du système,
   - (ii) une configuration dans laquelle le train épicycloïdal est dépourvu de degré de liberté interne et dans laquelle le train épicycloïdal est désaccouplé de l'entrée du système.

Lorsque l'on supprime les degrés de liberté internes du train épicycloïdal, ce dernier tourne en bloc.

Le dispositif permet que le train épicycloïdal alterne au moins entre les configurations (i) et (ii) ci-dessus.

L'invention permet d'utiliser le planétaire extérieur du train épicycloïdal qui joue le rôle d'un volant d'inertie comme un tampon énergétique. L'accouplement du train épicycloïdal à l'entrée du système permet que le planétaire extérieur soit entraîné par la courroie et la machine tournante et qu'il se charge en énergie cinétique.

La suppression des degrés de liberté internes du train épicycloïdal permet que tout ou partie de l'énergie cinétique du planétaire extérieur soit transmise au planétaire intérieur de façon à entraîner le compresseur en ne prélevant que peu ou pas de couple à la machine tournante.

Le système peut permettre d'obtenir un rapport de réduction variable entre la machine tournante et le compresseur au cours du temps grâce à l'évolution de la vitesse du planétaire extérieur. Le système permet notamment d'augmenter le rapport de réduction fourni par le système lorsque la vitesse de la machine tournante augmente au cours d'une phase transitoire suivant une augmentation de la consigne de couple de cette machine tournante.

Le train épicycloïdal peut être un train de type 1, étant formé par le planétaire extérieur, le planétaire intérieur, un ou plusieurs satellites, et le porte satellite. Le planétaire intérieur et le planétaire extérieur sont de préférence concentriques.

Le planétaire extérieur n'est relié à rien d'autre qu'au(x) satellite(s) avec le(s)quel(s) il engrène, afin de former le volant d'inertie. Le planétaire extérieur est ainsi libre en rotation.

Dans la configuration (i), l'accouplement du train épicycloïdal à l'entrée du système peut se faire par un accouplement entre le porte satellite du train épicycloïdal et l'entrée du système. Dans cette configuration (i), le planétaire intérieur peut être mobile par rapport au planétaire extérieur.

Le dispositif peut comprendre :
- un premier organe d'accouplement disposé de manière à supprimer sélectivement tout degré de liberté interne du train épicycloïdal, et
- un deuxième organe d'accouplement disposé de manière à accoupler sélectivement le train épicycloïdal et l'entrée du système, étant notamment interposé entre le porte satellite et l'entrée du système.

Le premier organe d'accouplement permet alors de solidariser le planétaire intérieur et le planétaire extérieur.

Le premier organe d'accouplement est par exemple interposé entre le porte satellite et le planétaire extérieur du train épicycloïdal.

En variante, le premier organe d'accouplement est interposé entre le porte satellite et le planétaire intérieur du train épicycloïdal.

Plus généralement, le premier organe d'accouplement est interposé entre deux éléments du train épicycloïdal, ces deux éléments étant choisis parmi le planétaire intérieur, le planétaire extérieur, le(s) satellite(s) et le porte satellite, et le premier organe d'accouplement permet d'accoupler sélectivement ces deux éléments.

Dans la configuration (i), le porte satellite peut être accouplé à l'entrée du système tout en étant mobile par rapport au planétaire intérieur, ce qui permet notamment d'entraîner grâce à la machine tournante le planétaire extérieur pour augmenter l'énergie cinétique de ce dernier,

Dans la configuration (ii), le planétaire intérieur peut être solidaire du planétaire extérieur sans que le porte satellite ne soit accouplé à l'entrée du système, ce qui permet que le planétaire extérieur cède au compresseur tout ou partie de son énergie cinétique pour entraîner ce dernier sans prélever de couple à la machine tournante.

Le rapport entre la vitesse en sortie et la vitesse en entrée du système peut varier d'un facteur au moins égal à deux.

L'un au moins du premier et du deuxième organe d'accouplement peut être un embrayage. Dans un exemple de mise en oeuvre de l'invention, le premier organe d'accouplement est un embrayage et le deuxième organe d'accouplement est un autre embrayage.

En variante le premier et/ou le deuxième organe d'accouplement peut être autre, par exemple un crabot.

Lorsque la sortie du système est reliée au compresseur, un réducteur peut être interposé entre cette sortie et ce compresseur. Ce réducteur a par exemple un rapport de réduction compris entre dix et vingt, étant par exemple de l'ordre de quinze.

Le rapport entre l'inertie du planétaire extérieur et l'inertie du planétaire intérieur peut être supérieur ou égal à dix, étant notamment supérieur à vingt. Un tel choix de valeur permet que le planétaire extérieur puisse emmagasiner une quantité d'énergie cinétique satisfaisante et permet aussi, lorsque le premier organe d'accouplement est en position accouplée sans que ce ne soit le cas du deuxième organe d'accouplement, que la vitesse du compresseur augmente bien plus rapidement que celle du planétaire extérieur, favorisant lorsque le compresseur est un compresseur de suralimentation d'un moteur thermique la suralimentation et ainsi l'augmentation du couple du moteur thermique.

Le système peut comprendre un frein configuré pour être appliqué sélectivement sur le planétaire extérieur du train épicycloïdal. Lorsque la vitesse de la machine tournante est insuffisante pour répondre de manière satisfaisante à la variation de la consigne de couple, l'application du frein sur le planétaire extérieur permet que tout le couple prélevé à la machine tournante soit utilisé pour entraîner le compresseur. Lorsque le frein est appliqué sur le planétaire extérieur, le système impose un rapport de réduction constant entre son entrée et sa sortie.

L'invention a encore pour objet, selon un autre de ses aspects, un procédé d'entraînement d'au moins un compresseur à l'aide du système tel que défini ci-dessus, l'entrée du système étant reliée à une courroie solidaire d'une machine tournante et la sortie du système étant reliée au compresseur, procédé dans lequel on modifie la configuration du train épicycloïdal de manière à ce que ce dernier prenne sélectivement au moins les configurations suivantes pour entraîner le compresseur:
- (i) une configuration dans laquelle le train épicycloïdal est accouplé à l'entrée du système,
- (ii) une configuration dans laquelle le train épicycloïdal est dépourvu de degré de liberté interne et est désaccouplé de l'entrée du système.

Comme mentionné précédemment, selon que l'on est dans l'une ou l'autre de ces configurations, on peut charger ou décharger en énergie cinétique le volant d'inertie formé par le planétaire extérieur.

La configuration (i) peut être obtenue en accouplant le porte satellite à l'entrée du système. Dans cette configuration (i), le planétaire intérieur peut être mobile par rapport au planétaire extérieur.

La configuration (ii) peut être obtenue en accouplant le porte satellite au planétaire intérieur.

Le procédé permet ainsi d'imposer un rapport variable entre la vitesse du compresseur et la vitesse de la machine tournante en fonction des circonstances. On peut ainsi utiliser le système d'entraînement sur une plus grande plage.

Lorsque la vitesse du planétaire extérieur est inférieure à une valeur prédéfinie, on peut accoupler le porte satellite à l'entrée du système, de manière à augmenter l'énergie cinétique du planétaire extérieur. Dans ce cas, le planétaire extérieur peut être mobile par rapport au planétaire intérieur. Cette configuration du train épicycloïdal permet alors, en prélevant du couple à la machine tournante, d'entraîner le compresseur tout en chargeant le planétaire extérieur en énergie cinétique.

Lorsque la vitesse du planétaire extérieur est supérieure à une valeur seuil, qui est par exemple égale à la valeur prédéfinie ci-dessus, on peut supprimer tout degré de liberté interne dans le train épicycloïdal tout en désaccouplant le train épicycloïdal de l'entrée du système, de manière à ce que tout ou partie de l'énergie cinétique du planétaire extérieur soit transférée au compresseur. On entraîne ainsi le compresseur sans prélever de couple à la machine tournante.

La valeur seuil et/ou la valeur prédéfinie peuvent être atteintes lorsque la vitesse du planétaire intérieur est égale à la vitesse du planétaire extérieur. Autrement dit, dans un exemple de mise en oeuvre du procédé :
- tant que la vitesse du planétaire extérieur est inférieure à la vitesse du planétaire intérieur, le porte satellite est accouplé à l'entrée du système et le planétaire extérieur 1 est mobile par rapport au planétaire intérieur et,
- à partir du moment où la vitesse du planétaire extérieur est supérieure ou égale à la vitesse du planétaire intérieur, le planétaire extérieur est solidaire du planétaire intérieur sans que le porte satellite ne soit accouplé à l'entrée du système.

Lorsque la machine tournante freine, on peut accoupler le porte satellite à l'entrée du système, de manière à augmenter l'énergie cinétique du planétaire extérieur. On récupère ainsi de l'énergie qui aurait autrement été dissipée.

Lorsque la vitesse de la machine tournante est inférieure à une valeur donnée, on peut appliquer un frein sur le planétaire extérieur. On immobilise par exemple le planétaire extérieur de manière à ce que tout le couple prélevé à la machine tournante par le système soit utilisé en temps réel pour entraîner le compresseur sans charger en énergie cinétique le planétaire extérieur. Lors de cette action du frein, le porte satellite peut être accouplé à l'entrée du système. Toujours lors de cette action du frein, le rapport entre la vitesse en sortie du système et la vitesse en entrée du système est constant.

Ultérieurement, on peut relâcher le frein de manière à permettre au planétaire extérieur de se charger en énergie cinétique puis, une fois la valeur seuil atteinte, on peut modifier la configuration du train épicycloïdal de manière à transférer au compresseur tout ou partie de l'énergie cinétique du planétaire extérieur.

Le procédé peut être mis en oeuvre lors d'une phase transitoire suivant une augmentation de la consigne de couple de la machine tournante.

La machine tournante peut être un moteur thermique et le compresseur peut être un compresseur de suralimentation disposé dans le circuit d'admission du moteur thermique. Dans ce cas, la valeur donnée de vitesse du moteur thermique conditionnant l'application du frein sur le planétaire extérieur peut être de 1500 tr/min.

Le compresseur peut être utilisé en complément d'un turbocompresseur et l'entraînement du compresseur par le planétaire extérieur sans prélever du couple au moteur thermique peut permettre à la fois d'augmenter la pression à l'admission du moteur tout en assurant une montée en régime du turbocompresseur.

Une fois la pression à l'admission du moteur, c'est-à-dire la pression dans le collecteur d'admission des gaz (« intake manifold » en anglais), égale à la pression permettant au moteur d'atteindre la consigne de couple, pour éviter que cette valeur de pression ne soit dépassée du fait de la montée en régime du turbocompresseur et de la pression fournie par le compresseur encore entraîné par le planétaire extérieur, on peut agir sur une vanne de type « wastegate » du circuit d'échappement du moteur thermique pour réguler la pression à l'admission du moteur à la valeur correspondant à la consigne de couple ainsi que les contrepressions à l'échappement du moteur. Le rendement du moteur peut ainsi être amélioré.

Dans le cas où l'on applique un frein sur le planétaire extérieur en raison de la vitesse trop faible du moteur thermique alors que se produit l'augmentation de la consigne de couple, cette application du frein peut cesser lorsque la pression à l'admission du moteur thermique atteint une valeur permettant au moteur thermique de suivre la consigne de couple.

Tout ou partie des caractéristiques ci-dessus mentionnées en rapport avec le système d'entraînement peuvent s'appliquer au procédé ci-dessus.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un exemple d'environnement dans lequel un système d'entraînement selon un exemple de mise en oeuvre de l'invention peut être utilisé
- la figure 2 représente en détail le train épicycloïdal du système de la figure 1, et
- les figures 3 à 12 représentent différents diagrammes relatifs à des exemples d'utilisation du système de la figure 1 pour entraîner un compresseur de suralimentation d'un moteur thermique de véhicule.

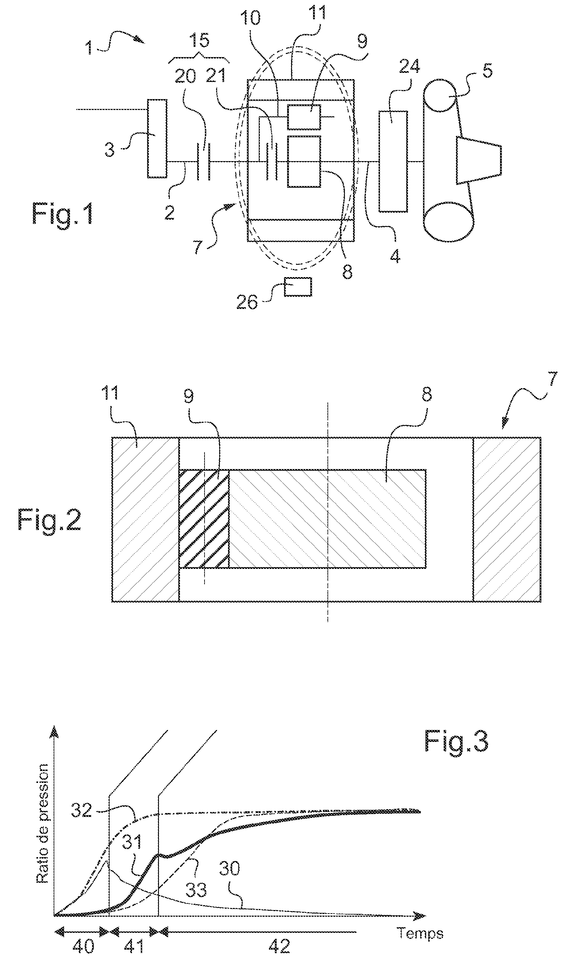

On a représenté sur la figure 1 un système d'entraînement 1 selon un exemple de mise en oeuvre de l'invention.

Le système 1 présente une entrée 2 qui est dans cet exemple reliée à une courroie 3 solidaire d'une machine tournante non représentée. La courroie peut présenter un rapport de réduction compris entre un et trois, par exemple égal à deux. Dans l'exemple considéré, la machine tournante est un moteur thermique d'un véhicule automobile. Le moteur thermique fonctionne par exemple avec l'essence ou le diesel comme carburant.

Le système 1 présente une sortie 4 qui est indirectement reliée à un compresseur 5. Dans l'exemple considéré, le compresseur 5 est un compresseur de suralimentation pour le moteur thermique. Il s'agit notamment, mais de façon non limitative, d'un compresseur centrifuge.

Comme représenté sur la figure 1, le système 1 comprend également un train épicycloïdal 7. Dans l'exemple considéré, le train 7 est de type un et il comprend un planétaire intérieur 8, des satellites 9, un porte satellite 10 et un planétaire extérieur 11.

Dans l'exemple considéré, le planétaire intérieur 8 est relié à la sortie 4 du système tandis que le porte satellite 10 est indirectement relié à l'entrée 2 du système. Le planétaire extérieur 11 est libre, formant un volant d'inertie.

Le rapport entre l'inertie du planétaire extérieur 11 et celle du planétaire intérieur 8 est dans l'exemple considéré supérieur à dix, voire à vingt.

Comme on peut le voir, le système 1 comprend en outre un dispositif 15 permettant de modifier la configuration du train épicycloïdal 7. Ce dispositif 15 se présente dans l'exemple décrit sous la forme de deux organes d'accouplement 20 et 21 qui sont notamment des embrayages.

Dans l'exemple considéré, le deuxième organe d'accouplement 20 est interposé entre l'entrée 2 du système 1 et le porte satellite 10 et il permet d'accoupler sélectivement l'entrée 2 au porte satellite 10. Le premier organe d'accouplement 21 est dans l'exemple considéré interposé entre le porte satellite 10 et le planétaire intérieur 8 et il permet d'accoupler sélectivement le porte satellite 10 et le planétaire intérieur 8, de manière à supprimer tout degré de liberté interne du train épicycloïdal 7.

Le dispositif 15 peut encore comprendre une unité de commande non représentée des organes d'accouplement 20 et 21. Le dispositif 15 est par exemple configuré de manière à ce que le train épicycloïdal 7 puisse prendre au moins les deux configurations suivantes :
- (i) le porte satellite 10 est accouplé à l'entrée du système 2 par le deuxième organe d'accouplement 20 sans être accouplé au planétaire intérieur 8 par le premier organe d'accouplement 21,
- (ii) le porte satellite 10 est accouplé au planétaire intérieur 8 par le premier organe d'accouplement 21 sans être accouplé à l'entrée du système 2 par le deuxième organe d'accouplement 20.

Comme représenté sur la figure 1, un réducteur additionnel 24 peut être disposé entre la sortie 4 du système 1 et le compresseur 5.

Lorsque le train épicycloïdal 7 est dans la configuration (i), le rapport entre la vitesse en sortie du système 1 et la vitesse en entrée 2 du système 1 varie par exemple entre un et trois tandis que lorsque le train épicycloïdal 7 est dans la configuration (ii), tout le train épicycloïdal 7 tourne à la même vitesse. Le système 1 peut également comprendre un frein 26, représenté de façon très schématique sur la figure 1, apte à venir s'appliquer contre le planétaire extérieur 11, comme on le verra par la suite.

Dans l'application qui va maintenant être décrite, la machine tournante est un moteur thermique de véhicule automobile. Le moteur comprend un circuit d'admission et un circuit d'échappement et le compresseur 5 est un compresseur de suralimentation disposé dans le circuit d'admission du moteur en complément du turbocompresseur.

Le circuit d'échappement comprend en outre dans l'application décrite une vanne dite wastegate permettant, selon sa position, à tout ou partie des gaz d'échappement de contourner la turbine du turbocompresseur.

L'entraînement du compresseur 5 à l'aide du système 1 va maintenant être décrit dans différentes situations.

Les figures 3 à 5 se rapportent à l'utilisation du système 1 pour entraîner le compresseur 5 suite à une augmentation de la consigne de couple du moteur thermique dans trois situations différentes. Sur les figures 3 à 5, la courbe 30 représente le ratio de pression du compresseur, c'est-à-dire le quotient entre la pression en sortie et la pression en entrée du compresseur 5, la courbe 31 représente le ratio de pression du turbocompresseur, la courbe 32 représente le ratio de pression total, c'est-à-dire le produit du ratio de pression du compresseur 5 et du turbocompresseur, et la courbe 33 représente le ratio de pression que l'on obtiendrait en l'absence du compresseur 5 et du système 1.

Dans le cas de la figure 3, la vitesse du planétaire extérieur 11 est initialement insuffisante pour permettre à ce dernier d'entraîner le compresseur 5 sans prélever de couple au moteur thermique.

On agit sur le dispositif 15 de manière à ce que le train épicycloïdal 7 soit dans la configuration (i) ci-dessus, c'est-à-dire que le porte satellite 10 soit accouplé à l'entrée 2 du système 1 sans être accouplé au planétaire intérieur 8. Cette configuration (i) se produit pendant une phase 40 représentée sur la figure 3.

Lors de cette phase 40, la courroie 3 entraîne le porte satellite 10 dont le mouvement est transmis aux satellites 9, et ces derniers engrenant avec le planétaire intérieur 8 et le planétaire extérieur 11, la vitesse du compresseur 5 et la vitesse du planétaire extérieur 11 augmentent. Comme représenté sur la figure 3, du fait du temps de réponse du turbocompresseur, durant cette phase, la montée en pression dans le circuit d'admission est quasiment exclusivement due au compresseur 5. En raison de l'inertie importante du planétaire extérieur 11, la vitesse de ce dernier augmente moins vite que la vitesse du compresseur 5, cette augmentation de la vitesse du planétaire extérieur 11 conduisant à une réduction du rapport entre la vitesse du planétaire intérieur 8 et celle du porte satellite 10, c'est-à-dire entre la vitesse en sortie du système 1 et la vitesse en entrée du système 1. Le planétaire extérieur 11 étant libre en rotation, sa vitesse augmente progressivement au cours de cette phase 40 et le planétaire extérieur 11 peut alors se charger en énergie cinétique grâce au couple prélevé au moteur thermique.

Lorsque la vitesse du planétaire extérieur 11 devient égale à celle du planétaire intérieur 8, on agit sur le dispositif 15 de sorte que le train épicycloïdal 7 passe de la configuration (i) à la configuration (ii) dans laquelle le porte satellite 10 est accouplé au planétaire intérieur 8 sans être accouplé à l'entrée 2 du système 1. Selon cette configuration, le train épicycloïdal 7 tourne en bloc.

Le passage à cette configuration (ii) correspond au début d'une phase 41. Lors de cette phase 41, aucun couple n'est prélevé au moteur thermique et l'entraînement du compresseur 5 est obtenu grâce au transfert du planétaire extérieur 11 vers le compresseur 5 de tout ou partie de l'énergie cinétique emmagasinée dans le planétaire extérieur 11 lors de la phase 40.

Comme représenté sur la figure 3, lors de cette phase 41, le turbocompresseur monte en régime, cette montée en régime étant notamment favorisée par le fait que le compresseur 5 a permis une montée en pression de suralimentation plus rapide donc une augmentation de l'énergie des gaz d'échappement qui entrainent la turbine du turbocompresseur. La phase 41 se termine lorsque la pression à l'admission du moteur atteint la valeur permettant au moteur de suivre la consigne de couple. Comme représenté sur la figure 3, lorsque cette valeur de pression est atteinte, de l'énergie cinétique peut encore être présente dans le planétaire extérieur 11, de sorte que ce dernier continue d'entraîner le compresseur 5. Pour éviter que la pression à l'admission ne devienne trop importante en raison de l'action cumulée du compresseur 5 et du turbocompresseur, on agit lors de la phase 42 qui suit la phase 41 sur la vanne dite wastegate du circuit d'échappement pour réguler la valeur de pression à l'admission à la valeur que l'on cherche à atteindre et pour limiter les contre-pressions à l'échappement.

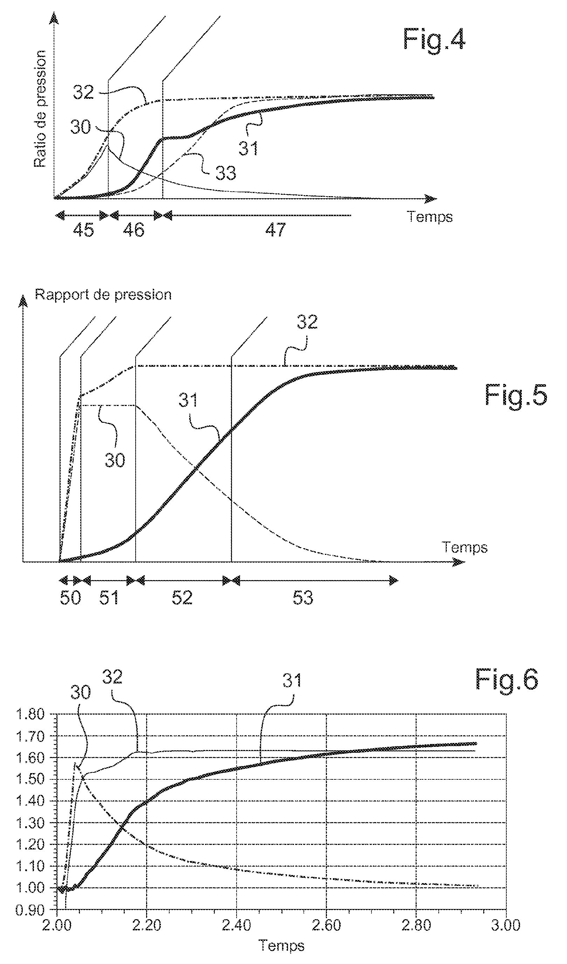

On va maintenant décrire en référence à la figure 4, un autre cas d'utilisation du système 1 pour entraîner le compresseur 5, suite à une augmentation de la consigne de couple du moteur thermique. Dans ce cas, de l'énergie cinétique a préalablement été emmagasinée dans le planétaire extérieur.

Une phase de freinage précède par exemple l'augmentation de la consigne de couple et, lors de cette phase de freinage, on agit sur le dispositif 15 de manière à ce que le train épicycloïdal 7 soit dans la configuration (i). Lors de cette phase de freinage, la courroie 3 entraîne le porte satellite 10 dont le mouvement est transmis aux satellites 9, et ces derniers engrenant avec le planétaire intérieur 8 et le planétaire extérieur 11, la vitesse du compresseur 5 et la vitesse du planétaire extérieur 11 augmentent. De l'énergie cinétique est ainsi emmagasinée dans le planétaire extérieur 11. Du fait du freinage du moteur thermique, un papillon dans le circuit d'admission du moteur en aval du compresseur peut se fermer, de sorte que le compresseur 5 fournit un couple résistant augmentant la vitesse du planétaire extérieur 11 et donc la quantité d'énergie cinétique emmagasinée dans celui-ci.

Lorsque l'augmentation de la consigne de couple se produit ensuite, on peut agir sur le dispositif 15 pour que le train épicycloïdal passe dans la configuration (ii). Le comportement du compresseur 5 va alors être décrit en référence à la figure 4.

Une première phase 45 correspond à la fermeture du premier organe d'accouplement 21. Comme représenté, lors de cette phase 45, la pression à l'admission du moteur est quasiment exclusivement fournie par le compresseur 5.

La phase 45 s'achève lorsque le train 7 est dans la configuration (ii) et des phases 46 et 47 similaires à celles décrites en référence à la figure 3 peuvent alors successivement se produire.

On va maintenant décrire en référence à la figure 5 un autre cas d'utilisation du système 1 pour entraîner le compresseur 5 suite à une augmentation de la consigne de couple du moteur. Dans ce cas, lors de cette augmentation de la consigne de couple, la vitesse du moteur thermique est faible, par exemple inférieure à 1500 tr/min.

En raison de cette faible valeur de la vitesse du moteur thermique, il n'est pas souhaitable de lui prélever du couple pour entraîner le compresseur et pour charger en énergie cinétique le planétaire extérieur 11. En conséquence, suite à cette augmentation de la consigne de couple du moteur thermique, on applique le frein 26 sur le planétaire extérieur 11 de manière à immobiliser ce dernier. Sur la figure 5, la phase 50 correspond à l'action sur le dispositif 15 de manière à ce que le train épicycloïdal prenne la configuration (i) tandis que le frein 26 est déjà appliqué sur le planétaire extérieur 11. Lors de cette phase 50, le ratio de pression total, dont se déduit la pression à l'admission du moteur, augmente fortement, étant quasiment identique au ratio de pression du compresseur 5.

La phase 51 succède à la phase 50 lorsque le train 7 est dans la configuration (i). Lors de cette phase 51, le compresseur 5 fonctionne à régime constant, comme on peut le voir sur la figure 5. La valeur constante du rapport entre la vitesse en sortie du système 1 et la vitesse en entrée du système 1 lors de cette phase 51 est par exemple strictement supérieure à deux, étant notamment comprise entre 2,5 et 3,5

La phase 51 se termine lorsque la pression à l'admission du moteur thermique prend une valeur permettant au moteur thermique de suivre la consigne de couple. On libère alors le frein 26, de sorte que, lors d'une phase ultérieure 52, le planétaire extérieur 11 peut se mettre en rotation et emmagasiner de l'énergie cinétique tandis que le turbocompresseur monte rapidement en pression. Lors de la phase 52, le rapport entre la vitesse en sortie du système 1 et la vitesse en entrée du système 1 diminue de la valeur qu'il avait à l'issue de la phase 51 pour atteindre un.

Cette phase 52 se termine lorsque le planétaire extérieur 11 et le planétaire intérieur 8 ont la même vitesse. On agit alors sur le dispositif 15 de manière à ce que le train épicycloïdal 7 prenne la configuration (ii) dans laquelle l'entraînement du compresseur 5 est effectué grâce à l'énergie cinétique préalablement emmagasinée dans le planétaire extérieur 11, sans prélever de couple au moteur thermique. Le cas échéant, cette phase 52 peut être suivie d'une phase ultérieure similaire aux phases 42 ou 47 décrites en référence aux figures 3 et 4.

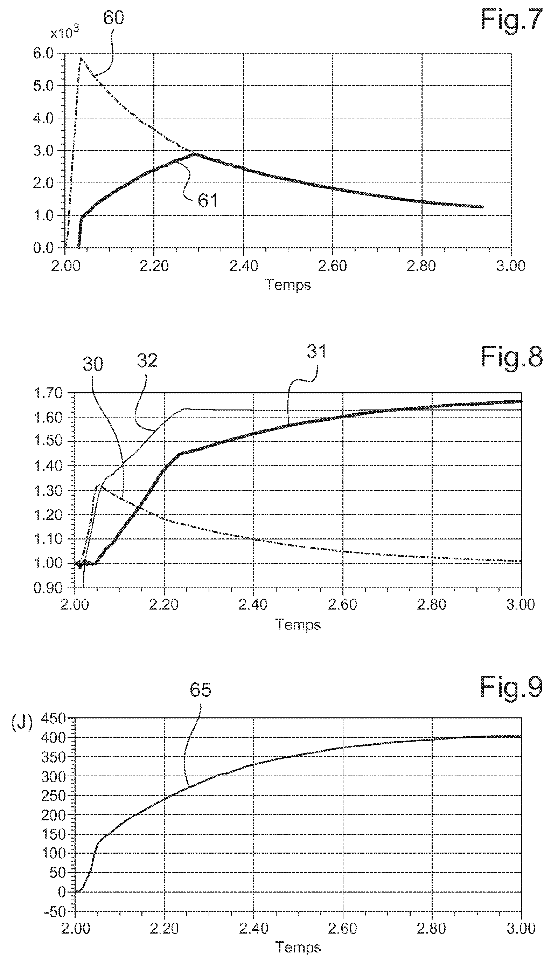

Les figures 6 et 7 correspondent au cas qui vient d'être décrit en référence à la figure 3, les figures 8 à 10 correspondent au cas qui vient d'être décrit en référence à la figure 4 et les figures 11 et 12 correspondent au cas qui vient d'être décrit en référence à la figure 5, pour un même dimensionnement du train épicycloïdal 7 et avec un moteur thermique 1,2 L essence turbo à injection directe.

### Plus particulièrement :

- les figures 6 et 7 correspondent au cas où la vitesse du moteur thermique est stable autour de 1800 tr/min, où le planétaire extérieur 11 n'est pas chargé préalablement en énergie cinétique, et où un appui maximal a lieu sur la pédale d'accélération à l'instant « deux secondes »,
- les figures 8 à 10 correspondent au cas où la vitesse du moteur thermique est stable autour de 1800 tr/min, où le planétaire extérieur 11 est chargé préalablement en énergie cinétique, et où un appui maximal a lieu sur la pédale d'accélération à l'instant « deux secondes », la figure 9 représentant la charge en énergie cinétique du planétaire extérieur 11 alors qu'un freinage a lieu, la vitesse du moteur thermique passant en cinq secondes de 3000 tr/min à 1500 tr/min lors de ce freinage,

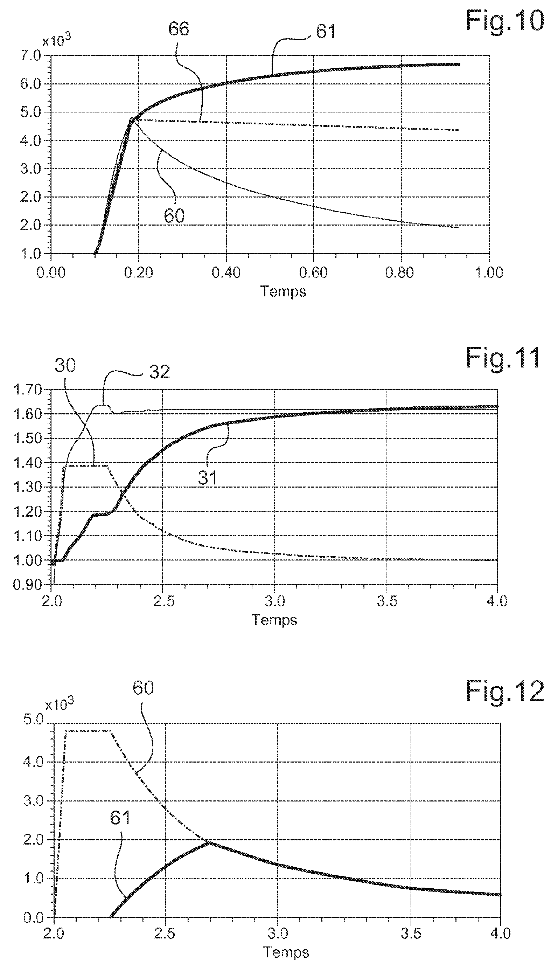

- les figures 11 et 12 correspondent au cas où la vitesse du moteur thermique est stable autour de 1200 tr/min et où un appui maximal a lieu sur la pédale d'accélération à l'instant « deux secondes ».

Le train épicycloïdal 7 présente dans le cas des figures 6 à 12 les dimensions suivantes :
- le planétaire intérieur 8 a un rayon intérieur nul, un rayon extérieur de 3 cm, une hauteur mesurée le long de son axe de rotation de 3 cm, une masse de 0,64 kg, un volume de 0,08 L, une masse volumique de 7,60 kg/L et une inertie de 2,9* 10⁻⁴ kg/m²,
- le planétaire extérieur 11 a un rayon intérieur de 4,5 cm, un rayon extérieur de 6,5 cm, une hauteur mesurée le long de son axe de rotation de 5 cm, une masse de 2,63 kg, un volume de 0,35 L, une masse volumique de 7,60 kg/L et une inertie de 2,8*10⁻³ kg/m².
- le satellite 9 a un rayon intérieur de 0 cm, un rayon extérieur de 0,75 cm, une hauteur mesurée le long de son axe de rotation de 3 cm, une masse de 0,04 kg, un volume de 0,01 L, une masse volumique de 7,60 kg/L et une inertie de 1,13*10⁻⁶ kg/m².

Sur les figures 7 et 12, la courbe 60 correspond à la vitesse du planétaire intérieur 8 tandis que la courbe 61 correspond à la vitesse du planétaire extérieur 11 en tr/min. Sur la figure 9, la courbe 65 correspond à l'énergie mécanique du compresseur 5.

Sur la figure 10, la courbe 66 correspond à la vitesse du porte satellite 10.

L'invention n'est pas limitée aux exemples qui viennent d'être décrits.

En particulier, le compresseur peut être autre qu'un compresseur centrifuge, par exemple un compresseur dit « roots » ou un compresseur à spirale.

En outre, d'autres positions existent pour le premier organe d'accouplement 21, dès lors que ces positions lui permettent de supprimer sélectivement tout degré de liberté dans le train épicycloïdal 7.

L'expression « comprenant un » doit être comprise comme synonyme de l'expression « comprenant au moins un », sauf lorsque le contraire est spécifié.

## Revendications

1. Système (1) d'entraînement d'au moins un compresseur (5), comprenant :
- une entrée (2) apte à être reliée à une courroie (3) solidaire d'une machine tournante,
- une sortie (4) apte à être reliée au compresseur (5),
- un train épicycloïdal (7) dont le planétaire extérieur (11) forme un volant d'inertie, ledit planétaire extérieur (11) n'étant relié à rien d'autre qu'au(x) satellite(s) (9) avec le(s)quel(s) il engrène, et dont le planétaire intérieur (8) est notamment relié à la sortie (4) du système (1), et
- un dispositif (15) permettant de modifier la configuration du train épicycloïdal (7) de manière à ce que dernier prenne sélectivement au moins les configurations suivantes :
- (i) une configuration dans laquelle le train épicycloïdal (7) est accouplé à l'entrée (2) du système (1),
- (ii) une configuration dans laquelle le train épicycloïdal (7) est dépourvu de degré de liberté interne tout en étant désaccouplé de l'entrée (2) du système (1).

2. Système selon la revendication 1, le dispositif (15) comprenant :
- un premier organe d'accouplement (21) disposé de manière à supprimer sélectivement tout degré de liberté interne du train épicycloïdal (7), et
- un deuxième organe d'accouplement (20) disposé de manière à accoupler sélectivement le train épicycloïdal (7) et l'entrée (2) du système (1).

3. Système selon la revendication 2, le premier organe d'accouplement (21) étant interposé entre le porte satellite (10) et le planétaire intérieur (8) du train épicycloïdal.

4. Système selon la revendication 2 ou 3, l'un au moins du premier (21) et du deuxième (20) organe d'accouplement étant un embrayage.

5. Système selon l'une quelconque des revendications précédentes, le rapport entre l'inertie du planétaire extérieur (11) et l'inertie du planétaire intérieur (8) étant supérieur à dix, étant notamment supérieur à vingt.

6. Système selon l'une quelconque des revendications précédentes, comprenant en outre un frein (26) configuré pour être appliqué sélectivement sur le planétaire extérieur (11) du train épicycloïdal (7).

7. Procédé d'entraînement d'au moins un compresseur (5) à l'aide du système (1) selon l'une quelconque des revendications précédentes, l'entrée (2) du système étant reliée à une courroie (3) solidaire d'une machine tournante et la sortie (4) du système (1) étant reliée au compresseur (5), procédé dans lequel on modifie la configuration du train épicycloïdal (7) de manière à ce que ce dernier prenne sélectivement au moins les configurations suivantes pour entraîner le compresseur (5):
- (i) une configuration dans laquelle le train épicycloïdal (7) est accouplé à l'entrée (2) du système (1),
- (ii) une configuration dans laquelle le train épicycloïdal (7) est dépourvu de degré de liberté interne et est désaccouplé de l'entrée (2) du système (1).

8. Procédé selon la revendication 7, dans lequel le porte satellite (10) est accouplé à l'entrée (2) du système (1) dans la configuration (i) et dans lequel le porte satellite (10) est accouplé au planétaire intérieur (8) dans la configuration (ii).

9. Procédé selon la revendication 7 ou 8, dans lequel, lorsque la vitesse du planétaire extérieur (11) est inférieure à une valeur prédéfinie, on accouple le porte satellite (10) à l'entrée (2) du système (1), de manière à augmenter l'énergie cinétique du planétaire extérieur (11).

10. Procédé selon la revendication 9, dans lequel, lorsque la vitesse du planétaire extérieur (11) est inférieure à la valeur prédéfinie, le porte satellite (10) n'est pas accouplé au planétaire intérieur (8).

11. Procédé selon l'une quelconque des revendications 7 à 10, dans lequel, lorsque la vitesse du planétaire extérieur (11) est supérieure à une valeur seuil, on accouple le porte satellite (10) au planétaire intérieur (8) sans que le porte satellite (10) ne soit accouplé à l'entrée (2) du système (1), de manière à ce que tout ou partie de l'énergie cinétique du planétaire extérieur (11) soit transférée au compresseur (5).

12. Procédé selon l'une quelconque des revendications 7 à 11, dans lequel lorsque la machine tournante freine, on accouple le porte satellite (10) à l'entrée (2) du système (1), de manière à augmenter l'énergie cinétique du planétaire extérieur (11).

13. Procédé selon l'une quelconque des revendications 7 à 12, dans lequel lorsque la vitesse de la machine tournante est inférieure à une valeur donnée, on immobilise le planétaire extérieur (11) à l'aide d'un frein (26).

14. Procédé selon l'une quelconque des revendications 7 à 13, étant mis en oeuvre lors d'une phase transitoire faisant suite à une variation de la consigne de couple de la machine tournante.

15. Procédé selon l'une quelconque des revendications 7 à 14, dans lequel la machine tournante est un moteur thermique et le compresseur (5) est un compresseur de suralimentation disposé dans le circuit d'admission du moteur thermique.

## Patentansprüche

1. System (1) zum Antrieb mindestens eines Verdichters (5), umfassend:
- einen Eingang (2), der mit einem Riemen (3) verbunden werden kann, der fest mit einer Drehmaschine verbunden ist,
- einen Ausgang (4), der mit dem Verdichter (5) verbunden werden kann,
- einen Planetenradsatz (7), dessen Hohlrad (11) ein Schwungrad bildet, wobei das Hohlrad (11) mit nichts anderem als dem/den Planetenrad/Planetenrädern (9), mit dem/denen es in Eingriff steht, verbunden ist, und dessen Sonnenrad (8) insbesondere mit dem Ausgang (4) des Systems (1) verbunden ist, und
- eine Vorrichtung (15) zur Veränderung der Konfiguration des Planetenradsatzes (7), dergestalt, dass letzterer selektiv mindestens die folgenden Konfigurationen annimmt:
- (i) eine Konfiguration, bei der der Planetenradsatz (7) mit dem Eingang (2) des Systems (1) gekoppelt ist,
- (ii) eine Konfiguration, bei der der Planetenradsatz (7) keinen internen Freiheitsgrad besitzt und dabei vom Eingang (2) des Systems (1) entkoppelt ist.

2. System nach Anspruch 1, wobei die Vorrichtung (15) Folgendes umfasst:
- ein erstes Kopplungsorgan (21), das dergestalt angeordnet ist, dass selektiv jeder interne Freiheitsgrad des Planetenradsatzes (7) unterbunden wird, und
- ein zweites Kopplungsorgan (20), das dergestalt angeordnet ist, dass der Planetenradsatz (7) und der Eingang (2) des Systems (1) selektiv gekoppelt werden.

3. System nach Anspruch 2, wobei das erste Kopplungsorgan (21) zwischen dem Planetenradträger (10) und dem Sonnenrad (8) des Planetenradsatzes angeordnet ist.

4. System nach Anspruch 2 oder 3, wobei mindestens eines des ersten (21) und des zweiten (20) Kopplungsorgans eine Kupplung ist.

5. System nach einem der vorangehenden Ansprüche, wobei das Verhältnis zwischen der Trägheit des Hohlrads (11) und der Trägheit des Sonnenrads (8) mehr als zehn beträgt, und insbesondere mehr als zwanzig beträgt.

6. System nach einem der vorangehenden Ansprüche, umfassend darüber hinaus eine Bremse (26), die dazu konfiguriert ist, selektiv auf das Hohlrad (11) des Planetenradsatzes (7) angewendet zu werden.

7. Verfahren zum Antrieb mindestens eines Verdichters (5) mithilfe des Systems (1) nach einem der vorangehenden Ansprüche, wobei der Eingang (2) des Systems mit einem Riemen (3) verbunden ist, der fest mit einer Drehmaschine verbunden ist, und der Ausgang (4) des Systems (1) mit einem Verdichter (5) verbunden ist, bei dem die Konfiguration des Planetenradsatzes (7) dergestalt verändert wird, dass dieser selektiv mindestens die folgenden Konfigurationen zum Antrieb des Verdichters (5) annimmt:
- (i) eine Konfiguration, bei der der Planetenradsatz (7) mit dem Eingang (2) des Systems (1) gekoppelt ist,
- (ii) eine Konfiguration, bei der der Planetenradsatz (7) keinen internen Freiheitsgrad besitzt und vom Eingang (2) des Systems (1) entkoppelt ist.

8. Verfahren nach Anspruch 7, bei dem der Planetenradträger (10) in der Konfiguration (i) mit dem Eingang (2) des Systems (1) gekoppelt ist und bei dem der Planetenradträger (10) in der Konfiguration (ii) mit dem Sonnenrad (8) gekoppelt ist.

9. Verfahren nach Anspruch 7 oder 8, bei dem, wenn die Drehzahl des Hohlrads (11) unter einem vordefinierten Wert liegt, der Planetenradträger (10) mit dem Eingang (2) des Systems (1) gekoppelt wird, dergestalt, dass die kinetische Energie des Hohlrads (11) erhöht wird.

10. Verfahren nach Anspruch 9, bei dem, wenn die Drehzahl des Hohlrads (11) unter dem vordefinierten Wert liegt, der Planetenradträger (10) nicht mit dem Sonnenrad (8) gekoppelt wird.

11. Verfahren nach einem der Ansprüche 7 bis 10, bei dem, wenn die Drehzahl des Hohlrads (11) über einem Schwellwert liegt, der Planetenradträger (10) mit dem Sonnenrad (8) gekoppelt wird, ohne dass der Planetenradträger (10) mit dem Eingang (2) des Systems (1) gekoppelt wird, dergestalt, dass die gesamte oder ein Teil der kinetischen Energie des Hohlrads (11) auf den Verdichter (5) übertragen wird.

12. Verfahren nach einem der Ansprüche 7 bis 11, bei dem, wenn die Drehmaschine bremst, der Planetenradträger (10) mit dem Eingang (2) des Systems (1) gekoppelt wird, dergestalt, dass die kinetische Energie des Hohlrads (11) erhöht wird.

13. Verfahren nach einem der Ansprüche 7 bis 12, bei dem, wenn die Drehzahl der umlaufenden Maschine unter einem gegebenen Wert liegt, das Hohlrad (11) mithilfe einer Bremse (26) festgestellt wird.

14. Verfahren nach einem der Ansprüche 7 bis 13, welches in einer Übergangsphase nach einer Veränderung der Drehmomentvorgabe der Drehmaschine umgesetzt wird.

15. Verfahren nach einem der Ansprüche 7 bis 14, bei dem die Drehmaschine ein Verbrennungsmotor ist und der Verdichter (5) ein Aufladerverdichter ist, der im Einlasskreis des Verbrennungsmotors angeordnet ist.

## Claims

1. System (1) for driving at least one compressor (5), comprising:
- an input (2) able to be connected to a belt (3) secured to a rotary machine,
- an output (4) able to be connected to the compressor (5),
- an epicyclic geartrain (7), the annulus gear (11) of which forms a flywheel, said annulus gear (11) being connected to nothing other than to the planet pinion(s) (9) with which it meshes, and the sun gear (8) of which is notably connected to the output (4) of the system (1), and
- a device (15) allowing the configuration of the epicyclic geartrain (7) to be modified so that the latter selectively adopts at least the following configurations:
- (i) a configuration in which the epicyclic geartrain (7) is coupled to the input (2) of the system (1),
- (ii) a configuration in which the epicyclic geartrain (7) has no internal degree of freedom while at the same time being uncoupled from the input (2) of the system (1).

2. System according to Claim 1, the device (15) comprising:
- a first coupling member (21) arranged in such a way as to selectively eliminate any internal degree of freedom of the epicyclic geartrain (7), and
- a second coupling member (20) arranged in such a way as to selectively couple the epicyclic geartrain (7) and the input (2) of the system (1).

3. System according to Claim 2, the first coupling member (21) being interposed between the planet carrier (10) and the sun gear (8) of the epicyclic geartrain.

4. System according to Claim 2 or 3, of the first (21) and of the second (20) coupling members at least one being a clutch.

5. System according to any one of the preceding claims, the ratio between the inertia of the annulus gear (11) and the inertia of the sun gear (8) being greater than ten, notably being greater than twenty.

6. System according to any one of the preceding claims, further comprising a brake (26) configured to be applied selectively to the annulus gear (11) of the epicyclic geartrain (7).

7. Method for driving at least one compressor (5) using the system (1) according to any one of the preceding claims, the input (2) of the system being connected to a belt (3) secured to a rotary machine and the output (4) of the system (1) being connected to the compressor (5), in which method the configuration of the epicyclic geartrain (7) is modified in such a way that the latter selectively adopts at least the following configurations for driving the compressor (5):
- (i) a configuration in which the epicyclic geartrain (7) is coupled to the input (2) of the system (1),
- (ii) a configuration in which the epicyclic geartrain (7) has no internal degree of freedom and is uncoupled from the input (2) of the system (1).

8. Method according to Claim 7, in which the planet carrier (10) is coupled to the input (2) of the system (1) in configuration (i), and in which the planet carrier (10) is coupled to the sun gear (8) in configuration (ii).

9. Method according to Claim 7 or 8, in which when the speed of the annulus gear (11) is less than a predefined value, the planet carrier (10) is coupled to the input (2) of the system (1) so as to increase the kinetic energy of the annulus gear (11).

10. Method according to Claim 9, in which when the speed of the annulus gear (11) is less than the predefined value, the planet carrier (10) is not coupled to the sun gear (8).

11. Method according to any one of Claims 7 to 10, in which when the speed of the annulus gear (11) is greater than a threshold value, the planet carrier (10) is coupled to the sun gear (8) without the planet carrier (10) being coupled to the input (2) of the system (1), such that all or some of the kinetic energy of the annulus gear (11) is transferred to the compressor (5).

12. Method according to any one of Claims 7 to 11, in which when the rotary machine brakes, the planet carrier (10) is coupled to the input (2) of the system (1) so as to increase the kinetic energy of the annulus gear (11).

13. Method according to any one of Claims 7 to 12, in which when the speed of the rotary machine is less than a given value, the annulus gear (11) is immobilized using a brake (26).

14. Method according to any one of Claims 7 to 13, implemented during a transient phase that follows on from a variation in torque setpoint of the rotary machine.

15. Method according to any one of Claims 7 to 14, in which the rotary machine is a combustion engine and the compressor (5) is a supercharging compressor positioned in the intake circuit of the combustion engine.
